# EUROPÄISCHE PATENTSCHRIFT

(11) **EP 0 864 794 B1**
(45) Veröffentlichungstag und Bekanntmachung des Hinweises auf die Patenterteilung: **17.07.2002**
(21) Anmeldenummer: 98100598.6
(22) Anmeldetag: 15.01.1998
(51) Int. Cl.: F16K 31/40, G05D 16/20

(54) **Proportional-Drosselventil**
Proportional throttle valve
Soupape d'étranglement proportionnelle

(30) Priorität: 14.03.1997 DE 19710636
(43) Veröffentlichungstag der Anmeldung: 16.09.1998
(73) Patentinhaber: Hydac Fluidtechnik GmbH, 66273 Sulzbach/Saar (DE)
(72) Erfinder: Hell, Franz-Rudolf, Dipl.-Ing., 66822 Lebach (DE)
(74) Vertreter: Patentanwälte Bartels und Partner

(56) Entgegenhaltungen:
- EP-A- 0 681 128
- DE-A- 2 909 768
- US-A- 2 665 708
- US-A- 4 201 362
- US-A- 4 753 212

## Beschreibung

Die Erfindung betrifft ein Proportional-Drosselventil mit einem elektrischen Magnetsystem zum Ansteuern eines Hauptkolbens, der über eine Zulauföffnung in fluidführender Verbindung mit dem Ventileinlaß steht und der mit einem den Ventileinlaß von dem Ventilauslaß absperrbaren Vorsteuerkolben zusammenwirkt, der Teil eines von einer Magnetspule des Magnetsystems ansteuerbaren Magnetankers ist, der gegen die Wirkung einer ersten Schließfeder bewegbar ist, die in einem Aufnahmeraum des zylindrischen Magnetankers geführt ist.

Ein elektromagnetisches Proportional-Druckregelventil mit den dahingehenden Merkmalen ist durch die DE 196 24 884 A1 bekannt. Dieses bekannte Druckregelventil weist einen Rückführkanal auf, der durch eine Kolbeneinrichtung zwischen der Druckkammer und dem Auslaßanschluß ausgebildet ist und dessen Öffnen und Schließen durch das Vorsteuerventil regelbar ist. Der Magnetanker des Magnetsystems steuert das Vorsteuerventil an, um das Öffnen und Schließen des Rückführkanales entsprechend zu regeln, wobei eine Einrichtung für das Verhindern der Bewegung des Vorsteuerventils infolge einer Schwankung des Fluiddrucks in der Druckkammer ungeachtet der elektromagnetischen Kraft, die durch das Magnetsystem erzeugt wird, vorhanden ist.

Hierdurch lassen sich ungewollte Regelschwingungen des Regelventils vermindern.

Durch die DE 44 16 279 A1 ist ein Magnetventil bekannt mit einer elektrisch erregbaren Magnetspule und einem in ihr geführten Magnetanker, der druckentlastet ausgebildet ist, indem ein Längskanal durchgehend den Magnetanker durchgreift. Durch eine Dichtung am Magnetanker sind Anschlußräume des Magnetventil voneinander getrennt, so daß unter Vermeidung einer Vorsteuerung auf direktem Wege relativ große Überströmquerschnitte zur Verfügung gestellt sind.

Ausgehend von diesem Stand der Technik liegt der Erfindung die Aufgabe zugrunde, ein Proportional-Drosselventil zu schaffen, mit dem die stufenlose Einstellung des Volumenstromes eines Druckmediums oder Druckfluids in Abhängigkeit von der elektrischen Steuergröße Strom möglich ist.

Eine dahingehende Aufgabe löst ein Proportional-Drosselventil mit den Merkmalen des Anspruches 1.

Dadurch, daß gemäß dem kennzeichnenden Teil des Anspruches 1 der Aufnahmeraum des zylindrischen Magnetankers ständig fluidführend mit dem Ventileinlaß über einen den Vorsteuerkolben durchgreifenden Längskanal in Verbindung steht und daß die ständig fluidführende Verbindung im Magnetanker durch eine Dämpfungsöffnung gebildet ist, ist eine stufenlose Einstellung des Volumenstroms eines Druckmediums oder Druckfluids in Abhängigkeit von der elektrischen Steuergröße Strom erreicht.

Im übrigen erzielt man durch die weitgehende Integration der Vorsteuerstufe in die Hauptstufe eine Reduzierung der Anzahl von Einzelteilen, was kostengünstig ist und zu einer wesentlich kompakteren Abmessung des als Einbauteil ausbildbaren Proportional-Drosselventils führt.

Weitere vorteilhafte Ausgestaltungen des Proportional-Drosselventils sind Gegenstand der Unteransprüche.

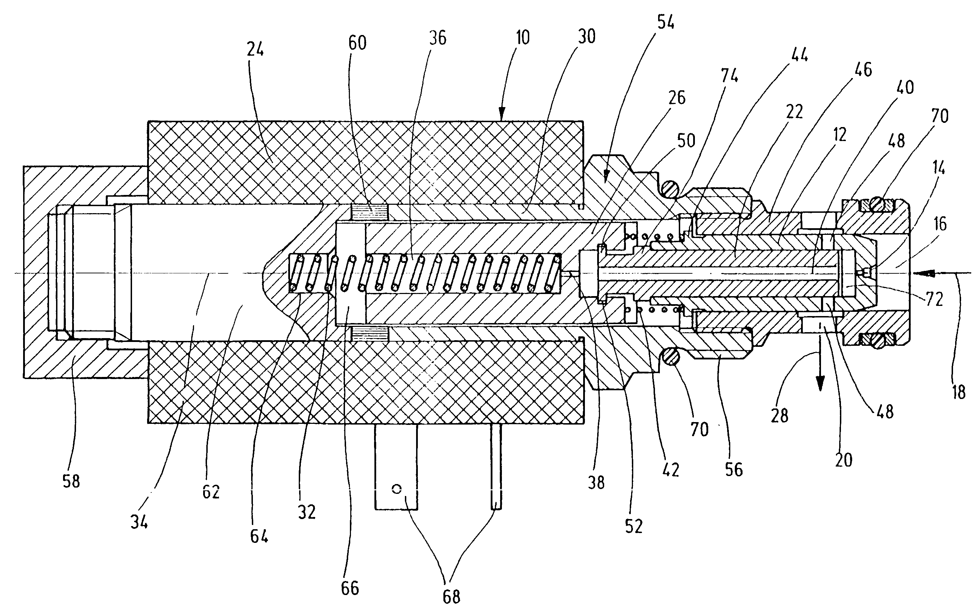

Im folgenden wird das erfindungsgemäße Proportional-Drosselventil an Hand eines Ausführungsbeispieles nach der Figur näher erläutert. Die Figur zeigt in prinzipieller, nicht maßstäblicher Darstellung einen Längsschnitt durch das Proportional-Drosselventil.

Das Proportional-Drosselventil ist mit einem als Ganzes mit 10 bezeichneten elektrischen Magnetsystem versehen. Dieses dient dem Ansteuern eines Hauptkolbens 12. Der Hauptkolben 12 ist über eine Zulauföffnung 14 in Form einer sich zum Innern des Ventils hin verjüngenden Bohrung mit dem Ventileinlaß 16 in ständiger, fluidführender Verbindung. Die Einströmrichtung des Fluids ist in der Zeichnung mit einem Pfeil 18 wiedergegeben. Der Hauptkolben 12 wirkt darüber hinaus mit einem den Ventileinlaß 16 von dem Ventilauslaß 20 absperrbaren Vorsteuerkolben 22 zusammen, der Teil eines von einer Magnetspule 24 des Magnetsystems 10 ansteuerbaren Magnetankers 26 ist. Die Auslaßrichtung des Fluids ist nach dem Ventilauslaß 20 mit einem Pfeil 28 gekennzeichnet.

Die eine Wicklung aufweisende Magnetspule 24 umfaßt ein Polrohr 30, in dem der Magnetanker 26 gegen die Wirkung einer ersten Schließfeder 32 bewegbar ist. Die als Druckfeder ausgebildete erste Schließfeder 32 ist in einem entlang der Längsachse 34 des Proportional-Drosselventils angeordneten Aufnahmeraum 36 des zylindrischen Magnetankers 26 geführt, der über eine sog. Dämpfungsöffnung oder -bohrung 38 in ständiger, fluidführender Verbindung mit dem Ventileinlaß 16 über einen den Vorsteuerkolben 22 entlang der Längsachse 34 verlaufenden, durchgreifenden Längskanal 40 steht.

Des weiteren ist zwischen dem Magnetanker 26 und dem Hauptkolben 12 eine weitere zweite Schließfeder 42 angeordnet, die ebenfalls als Druckfeder ausgebildet ist. Der Hauptkolben 12 weist einen ringförmigen Anschlagbund 44 auf, an dem sich das eine Ende der zweiten Schließfeder 42 abstützt, wohingegen sie mit ihrem anderen Ende in Anlage mit der in Richtung des Ventileinlasses 16 orientierten Stirnseite des Magnetankers 26 ist. Der ringförmig, sich nach außen über den Außenumfang des Hauptkolbens 12 hinaus erweiternde Anschlagbund 44 ist dabei in stirnseitige Anlage mit einem Ventilkörper 46 bringbar, der den Ventileinlaß 16 sowie den Ventilauslaß 20 aufweist. Der Hauptkolben 12 ist quer zur Längsachse 34 mit zwei zu dieser Längsachse 34 radial einander gegenüberliegenden Ablauföffnungen 48 versehen, die von dem Vorsteuerkolben 22 abdeckbar sind und die in den Ventilauslaß 20 münden, der außenumfangsseitig eine Ringnut in dem Ventilkörper 46 bildet.

Der Vorsteuerkolben 22 greift über einen Anschlagbund 50 mit radialem Spiel in eine zugeordnete Radialausnehmung 52 des Magnetankers 24 ein. Das zwischen Magnetanker 26 und Ventilkörper 46 angeordnete Polrohr 30 weist unter Bildung einer Einschraubpatrone 54 ein Einschraubteil 56 auf. Des weiteren ist das Polrohr 30 druckdicht insbesondere über eine Abschlußkappe 58 von der Umgebung getrennt. Zwischen der Abschlußkappe 58 und dem druckdichten Polrohr 30 und von diesem über eine Trennstelle 60 magnetisch getrennt ist von der Magnetspule 24 radial umgeben ein feststehender Abstützkolben 62 vorhanden, an dem sich die erste Schließfeder 32 über eine Ringausnehmung 64 mit ihrem Ende abstützt. Bei der in der Figur dargestellten geschlossenen Stellung des Proportional-Drosselventils ist zwischen dem Abstützkolben 62 und dem kolbenartigen Magnetanker 26 ein Freiraum 66 derart gebildet, daß der stirnseitige Abstand zwischen den zugewandten Teilen von Abstützkolben 62 und Magnetanker 26 größer gleich dem maximal vorgesehenen Verschiebeweg des Vorsteuerkolbens 22 zur Freigabe der beiden Ablauföffnungen 48 ist.

Über die fertigungstechnisch bedingten Laufspiele von Hauptkolben 12 und Vorsteuerkolben 22 gelangt nur eine geringe Leckagemenge zum Ventilauslaß 20. Des weiteren gelangt über die fertigungstechnisch bedingten Laufspiele von Hauptkolben 12 und Vorsteuerkolben 22 eine geringe Fluidleckagemenge zum Ventileinlaß 16. Zwecks Ansteuern der Magnetspule 24 ist diese mit elektrischen Anschlußstellen 68 in Form von Kontaktsteckern versehen. Der Ventilkörper 46 ist außenumfangsseitig mit einem Außengewinde versehen, das in ein Innengewinde des Einschraubteiles 56 einschraubbar ist. Das Einschraubteil 56 weist wiederum ein Außengewinde der Art auf, daß das gesamte Proportional-Drosselventil als eine Art Einschraubpatrone 54 mit ansteuerbaren Hydraulikteilen, wie Maschinengehäusen od.dgl., fest verbindbar ist. Zum Herstellen einer dahingehenden Verbindung weisen dabei sowohl der Ventilkörper 46 als auch das Einschraubteil 56 in üblicher Weise Ringdichtungen 70 auf. Zwischen der Stirnseite des Vorsteuerkolbens 22, die dem Ventileinlaß 16 zugekehrt ist, und dem dieser Stirnseite zugewandten Endseite des Hauptkolbens 12 ist ein Fluideintrittsraum 72 begrenzt, in den die Zulauföffnung 14 mündet, sowie der den Vorsteuerkolben 22 vollständig durchgreifende Längskanal 40. Sowohl die Zulauföffnung 14 als auch der Längskanal 40 sowie die Dämpfungsöffnung 38 verlaufen koaxial zur Längsachse 34 des Proportional-Drosselventils. Von der zweiten Schließfeder 42 umgeben ist neben dem ersten Anschlagbund 50 ein weiterer zweiter Anschlagbund 74 am Vorsteuerkolben 22 vorgesehen, der sich stirnseitig an einem Ende des Hauptkolbens 12 abstützt, der dem Magnetanker 26 zugewandt ist.

Zum besseren Verständnis des Proportional-Drosselventils wird im folgenden seine Funktion näher beschrieben.

Bei stromloser Magnetspule 24 ist das Proportional-Drosselventil geschlossen, d.h. Ventileinlaß 16 ist vom Ventilauslaß 20 getrennt. Dabei drückt die erste Schließfeder 32 über den Magnetanker 26 den Vorsteuerkolben 22 mit seinem weiteren Anschlagbund 74 auf den Hauptkolben 12. Der Hauptkolben 12 wiederum stützt sich mit seinem Anschlagbund 44 am Ventilkörper 46 ab. Bei Druckbeaufschlagung am Ventileinlaß 16 wird der Druck über die eine Vorsteuerung bewirkende Zulauföffnung 14 und den Längskanal im Vorsteuerkolben 22 auf die Rückseite des Hauptkolbens 12 auf diesen wirksam und gelangt des weiteren durch die Dämpfungsöffnung 38 und den Aufnahmeraum 36 der ersten Schließfeder 32 im Magnetanker 26 auf die Rückseite desselben. Hauptkolben 12, Vorsteuerkolben 22 und Magnetanker 26 sind dadurch druckausgeglichen und durch die Druckkraft der ersten Schließfeder 32 bleibt das Ventil in seiner in der Figur gezeigten geschlossenen Stellung. Bei einer Druckbeaufschlagung am Ventilauslaß 20 bleibt das Proportional-Drosselventil aufgrund fehlender Differenzflächen an dem Hauptkolben 12 und dem Vorsteuerkolben 22 ebenfalls geschlossen.

Bei einer Bestromung der Wicklung der Magnetspule 24 über die Kontaktstekker 63 verfahren der Magnetanker 26 und der radial beweglich und axial formschlüssig mit ihm verbundene Vorsteuerkolben 22 gegen die Druckkraft der ersten Schließfeder 32 um einen vorgebbaren Hub auf, der proportional zur Größe des eingespeisten Spulenstromes ist. Bei einem vorgebbaren bestimmten Hub beginnt dann der Vorsteuerkolben 22 die beiden einander gegenüberliegenden, eine Vorsteuerung bewirkenden Ablauföffnungen 48 zu öffnen.

Besteht ein Druckgefälle zwischen Ventileinlaß 16 und Ventilauslaß 20, erzeugt die einsetzende Fluidströmung über Zulauföffnung 14 eine Druckdifferenz zwischen der Zulaufseite des Hauptkolbens 12 und seiner der ersten Schließfeder 32 zugewandten Rückseite. Daraus resultiert eine in Öffnungsrichtung wirkende Kraft auf den Hauptkolben 12, die diesen bei einer weiteren Erhöhung des Spuleneingangsstromes dem Hub des Vorsteuerkolbens 22 folgen läßt. Durch eine vorgebbare Formung des Hauptkolbens 12 an seiner dem Ventileinlaß 16 zugewandten Seite wird ab einem bestimmten Hub ein Durchlaßquerschnitt zwischen Ventileinlaß 16 und Ventilauslaß 20 freigegeben, der mit zunehmendem Hub sich entsprechend gleichförmig mit vergrößert. Vorzugsweise ist dabei die stirnseitige Form des Hauptkolbens 12, wie in der Figur gezeigt, kegelförmig ausgebildet.

Wird der elektrische Spulenstrom nicht mehr erhöht und bleibt mithin in seiner Stärke gleich, nimmt der Hauptkolben 12 eine Stellung ein, in welcher die angreifenden Kräfte, die sich aus einer hydraulischen Kraft in Öffnungsrichtung und einer Kraft der zweiten Schließfeder 42 in Schließrichtung zusammensetzen, aufgrund der vom stellungsabhängig variablen Vorsteuervolumenstrom erzeugten Druckdifferenz ausgeglichen sind.

Bei einer sich etwaig anschließenden Verringerung des elektrischen Spulenstromes für das Magnetsystem 10 drückt die erste Schließfeder 32 den Magnetanker 26 und damit den Vorsteuerkolben 22 zurück. Dieser verschließt die Ablauföffnungen 48 im Hauptkolben 12 und der Vorsteuervolumenstrom wird unterbrochen. Dadurch ist der Hauptkolben 12 wieder druckausgeglichen und er folgt aufgrund der Kraft der zweiten Schließfeder 42 dem Hub des Vorsteuerkolbens 22. Wird die Magnetspule 24 stromlos gemacht, drückt die erste Schließfeder 32 den Vorsteuerkolben 22 und den Hauptkolben 12 in die Ausgangslage zurück und Ventileinlaß 16 und Ventilauslaß 20 werden voneinander getrennt. Die hydraulische Lagerückführung des Hauptkolbens 12 erfolgt also über die jeweilige Ablauföffnung 48 im Hauptkolben 12, der in Verbindung mit dem Vorsteuerkolben 22 in der Art einer Verstelldrossel ausgebildet ist.

Mit dem erfindungsgemäßen Proportional-Drosselventil erzielt man durch die weitgehende Integration der Vorsteuerstufe in die Hauptstufe eine Reduzierung der Anzahl von Einzelteilen, was kostengünstig ist und zu einer wesentlich kompakteren Abmessung des als Einbauteil ausbildbaren Proportional-Drosselventils führt.

## Patentansprüche

1. Proportional-Drosselventil mit einem elektrischen Magnetsystem (10) zum Ansteuern eines Hauptkolbens (12), der über eine Zulauföffnung (14) in fluidführender Verbindung mit einem Ventileinlaß (16) steht und der mit einem den Ventileinlaß (16) von einem Ventilauslaß (20) absperrbaren Vorsteuerkolben (22) zusammenwirkt, der Teil eines von einer Magnetspule (24) des Magnetsystems (10) ansteuerbaren Magnetankers (26) ist, der gegen die Wirkung einer ersten Schließfeder (32) bewegbar ist, die in einem Aufnahmeraum (36) des zylindrischen Magnetankers (26) geführt ist, **dadurch gekennzeichnet, daß** der Aufnahmeraum (36) des zylindrischen Magnetankers (26) ständig fluidführend mit dem Ventileinlaß (16) über einen den Vorsteuerkolben (22) durchgreifenden Längskanal (40) in Verbindung steht und daß die ständig fluidführende Verbindung im Magnetanker (26) durch eine Dämpfungsöffnung (38) gebildet ist.

2. Proportional-Drosselventil nach Anspruch 1, **dadurch gekennzeichnet, daß** zwischen Magnetanker (26) und dem Hauptkolben (12) eine zweite Schließfeder (42) angeordnet ist.

3. Proportional-Drosselventil nach Anspruch 2, **dadurch gekennzeichnet, daß** der Hauptkolben (12) einen Anschlagbund (44) aufweist, der in Anlage mit einem Ventilkörper (46) bringbar ist, der den Ventileinlaß (16) und den Ventilauslaß (20) aufweist.

4. Proportional-Drosselventil nach einem der Ansprüche 1 bis 3, **dadurch gekennzeichnet, daß** der Hauptkolben (12) mit Ablauföffnungen (48) versehen ist, die von dem Vorsteuerkolben (22) abdeckbar sind und die in den Ventilauslaß (20) münden.

5. Proportional-Drosselventil nach einem der Ansprüche 1 bis 4, **dadurch gekennzeichnet, daß** der Vorsteuerkolben (22) über einen Anschlagbund (50) mit radialem Spiel in einer zugeordneten Radialausnehmung (52) des Magnetankers (24) eingreift.

6. Proportional-Drosselventil nach einem der Ansprüche 3 bis 5, **dadurch gekennzeichnet, daß** ein Polrohr (30) zwischen Magnetanker (26) und Ventilkörper (46) unter Bildung einer Einschraubpatrone (54) ein Einschraubteil (56) aufweist.

7. Proportional-Drosselventil nach Anspruch 6, **dadurch gekennzeichnet, daß** das Polrohr (30) druckdicht ausgebildet ist.

## Claims

1. A proportional throttle valve with an electrical magnet system (10) for activating a main piston (12) which communicates by fluid via an intake port (14) with a valve inlet (16) and co-acts with a pilot control piston (22) shutting off the valve inlet (16) from a valve outlet (20), the said pilot control piston being part of a magnet armature (26) activated by a solenoid coil (24) of the magnet system (10), movable against the force of the first closing spring (32) located in the space (36) of the cylindrical magnet armature (26), **characterised in that** the space (36) of the cylindrical magnet armature (26) continually communicates by the fluid in it with the valve inlet (16) via a longitudinal channel (40) passing through the pilot control piston (22) and that the continuous connection by fluid in the magnet armature (26) is formed by a damping port (38).

2. A proportional throttle valve according to Claim 1, **characterised in that** a second closing spring is arranged between the magnet armature (26) and the main piston (12).

3. A proportional throttle valve according to Claim 2, **characterised in that** the main piston (12) has a stop collar (44) which can be brought to abut against a valve body (46) which has the valve inlet (16) and the valve outlet (20).

4. A proportional throttle valve according to one of the Claims 1 to 3, **characterised in that** the main piston (12) has drain holes (48) which can be covered by the pilot control piston (22) and terminating in the valve outlet (20).

5. A proportional throttle valve according to one of the Claims 1 to 4, **characterised in that** the pilot control piston (22) engages through a stop collar with a radial clearance in an associated radial recess (52) in the magnet armature (24).

6. A proportional throttle valve according to one of the Claims 3 to 5, **characterised in that** the pole tube (30) has a threaded adaptor (56), between the magnet armature (26) and the valve body (46), forming a screw-in cartridge (54).

7. A proportional throttle valve according to Claim 6, **characterised in that** the pole tube (30) is pressure-tight.

## Revendications

1. Soupape d'étranglement proportionnelle comprenant un système électromagnétique (10) destiné à actionner un piston principal (12) qui, par l'intermédiaire d'un orifice d'entrée (14), est en liaison fluidique avec un orifice d'admission de soupape (16) et qui coopère avec un piston distributeur (22) apte à fermer l'orifice d'admission de soupape (16) par rapport à un orifice de sortie de soupape (20), lequel constitue une partie d'un rotor (26) de la magnéto, qui peut être commandé par une bobine magnétique (24) du système électromagnétique (10) et qui peut être déplacé à l'encontre de la force exercée par un premier ressort de fermeture (32), qui est guidé dans un logement (36) du rotor (26) cylindrique, **caractérisée en ce que** le logement (36) du rotor (26) cylindrique est en permanence en liaison fluidique avec l'orifice d'admission de soupape (16) par l'intermédiaire d'un canal longitudinal (40) passant à travers le piston distributeur (22) et **en ce que** la liaison fluidique permanente est formée dans le rotor (26) par un orifice d'amortissement (38).

2. Soupape d'étranglement proportionnelle selon la revendication 1, **caractérisée en ce qu'**un second ressort de fermeture (42) est disposé entre le rotor (26) et le piston principal (12).

3. Soupape d'étranglement proportionnelle selon la revendication 2, **caractérisée en ce que** le piston principal (12) comporte un collet de butée (44), qui peut être amené en appui contre un corps de soupape (46), qui est muni de l'orifice d'admission (16) et de l'orifice de sortie (20).

4. Soupape d'étranglement proportionnelle selon une des revendications 1 à 3, **caractérisée en ce que** le piston principal (12) comporte des orifices d'écoulement (48), qui peuvent être obturés par le piston distributeur (22) et qui débouchent dans l'orifice de sortie (20) de la soupape.

5. Soupape d'étranglement proportionnelle selon une des revendications 1 à 4, **caractérisée en ce que** le piston distributeur (22) s'engage avec un jeu radial dans un orifice radial (52) correspondant du rotor (24), par l'intermédiaire d'un collet de butée (50).

6. Soupape d'étranglement proportionnelle selon une des revendications 3 à 5, **caractérisée en ce qu'**un tube polaire (30) entre le rotor (26) et le corps de soupape (46) comporte une partie filetée (56) formant une cartouche filetée (54).

7. Soupape d'étranglement proportionnelle selon la revendication 6, **caractérisée en ce que** le tube polaire (30) est étanche à la pression.
